# EUROPÄISCHE PATENTSCHRIFT

(11) **EP 0 905 004 B1**
(45) Veröffentlichungstag und Bekanntmachung des Hinweises auf die Patenterteilung: **28.05.2003**
(21) Anmeldenummer: 98117036.8
(22) Anmeldetag: 09.09.1998
(51) Int. Cl.: B62B 3/18

(54) **Stapelbarer Einkaufswagen**
Nestable shopping trolley
Chariot d'achat emboîtable

(30) Priorität: 24.09.1997 DE 19742199; 20.10.1997 DE 19745987
(43) Veröffentlichungstag der Anmeldung: 31.03.1999
(73) Patentinhaber: WANZL METALLWARENFABRIK GMBH, D-89336 Leipheim (DE)
(72) Erfinder: Eichele, Hermann, 89340 Leipheim (DE); Losert, Manfred, 89340 Leipheim (DE)

(56) Entgegenhaltungen:
- DE-U- 8 500 639
- DE-U- 8 508 238
- DE-U- 9 318 735

## Beschreibung

Die Erfindung betrifft einen stapelbaren Einkaufswagen, mit einer Schiebeeinrichtung und mit einem mit Fahrrollen ausgestatteten Fahrgestell, dessen Längsseiten durch ein- oder mehrteilige Träger gebildet sind, die einen in Schieberichtung sich verjüngenden Korb tragen, dessen rückwärtiges Ende durch eine Klappe verschließbar ist, wobei im hinteren Bereich des Einkaufswagens eine aus einer Nichtgebrauchslage in eine rückwärtige Gebrauchslage und umgekehrt bewegbare, ein Schwenkteil und ein Abstellteil aufweisende, zum Abstellen größerer Gegenstände bestimmte Ablage vorgesehen ist und wobei das Schwenkteil um eine horizontale Achse verschwenkbar sowie wahlweise anhebbar am Fahrgestell gelagert ist und das Abstellteil mit seinem vorderen Abschnitt schiebebeweglich geführt und mit seinem hinteren Bereich um eine horizontale Achse bewegbar mit dem Schwenkteil verbunden ist.

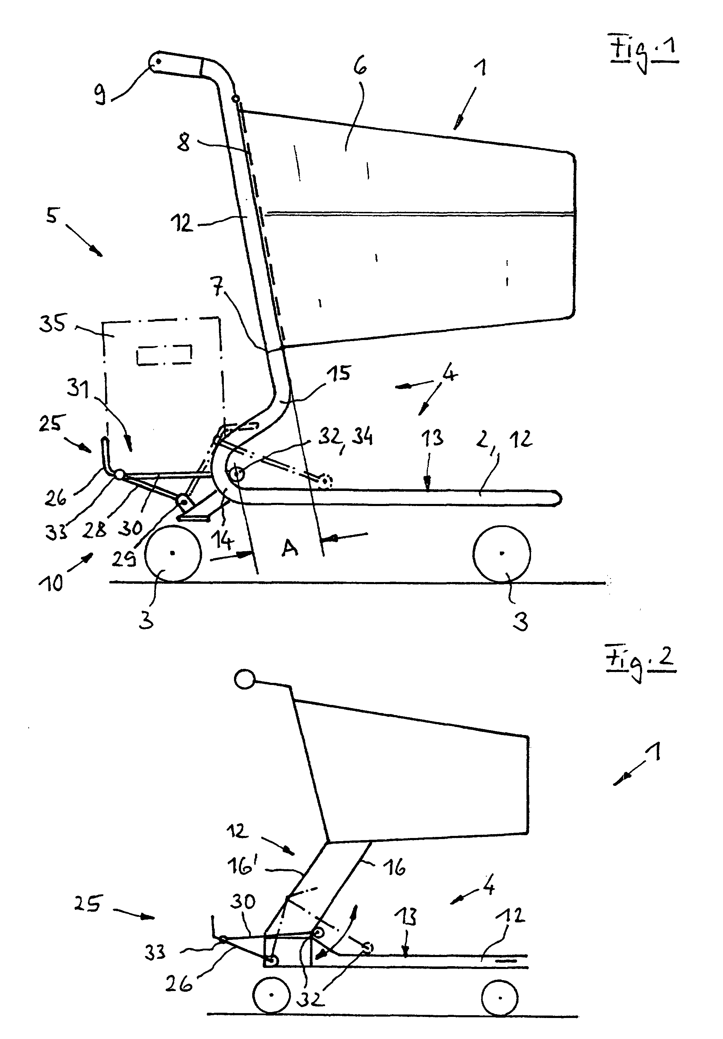

Zum nächstliegenden Stand der Technik zählen Einkaufswagen, die in der deutschen Gebrauchsmusterschrift G 93 18 735.1 beschrieben sind. Um die Schiebebeweglichkeit des vorderen Abschnittes des Abstellteiles zu ermöglichen, weisen diese Einkaufswagen an ihren Längsseiten je eine Führung auf. In die Führungen greifen Vorsprünge des Abstellteiles. Während bei den in Fig. 1 und 3 der genannten Schrift gezeigten Ausführungsbeispielen die Führungen durch zusätzliche Teile gebildet sind, nutzt das Ausführungsbeispiel nach Fig. 2 die Zwischenräume, die durch beabstandete Drahtstäbe der Träger gebildet sind. Zusätzliche Teile an Geräten bedeuten grundsätzlich eine Erhöhung der Fertigungskosten. Aus im Abstand angeordneten Drahtstäben gefertigte Träger wiederum dürfen in jenen Bereichen, in welchen die Vorsprünge des Abstellteiles schiebebeweglich geführt sind, keine Teile aufweisen, welche die Drahtstäbe verbinden. Dies bedeutet eine Schwächung der Träger. Ferner kann in diesen Bereichen kein Teil, z.B. eine Querstrebe, vorgesehen werden, welche beispielsweise in stabilisierender Weise die Träger verbindet und/oder zum weiteren Abstützen des Korbes bestimmt ist.

Ausgehend von diesem Stand der Technik besteht die Aufgabe der Erfindung darin, einen gattungsgemäßen Einkaufswagen so weiterzuentwickeln, daß auf zusätzliche Führungen verzichtet werden kann bzw. daß bei Einkaufswagen, deren Träger durch auf Abstand gehaltene Drahtstäbe gebildet sind, im Bereich der Führungen wenigstens ein zusätzliches Teil, etwa eine Querstrebe, vorgesehen werden kann.

Die Lösung der Aufgabe besteht darin, daß das Abstellteil mit seinem vorderen Abschnitt auf den Trägern aufliegt.

Wie die nachfolgenden Beispiele zeigen, sind die Vorteile der Erfindung beachtlich. Die erfindungsgemäßen Einkaufswagen brauchen keine zusätzlichen, die Führungen bildende Teile. Bereits vorhandenen und zum Aufbau der Fahrgestelle ohnehin erforderlichen Bauteilen wird nunmehr diese Führungsfunktion übertragen. Durch das Einsparen zusätzlicher Führungsteile ergeben sich erhebliche Kostenreduzierungen, wenn man bedenkt, daß Einkaufswagen als Massenartikel einzustufen sind. Bereits geringe Beträge pro Wagen summieren sich bei der Vielzahl derartiger Einkaufswagen zu erheblichen Summen.
Sind die Träger, wie eingangs erwähnt, aus auf Abstand gehaltenen Drahtstäben gebildet, können zwischen den Drahtstäben Teile, z.B. eine die Träger verbindende Querstrebe eingesetzt werden, ohne daß es zu Behinderungen zwischen einer derartigen Querstrebe und dem Abstellteil der Ablage kommt. Das Abstellteil ist über der Querstrebe angeordnet und kann sich somit, auf den Trägern aufliegend, frei bewegen.

Obwohl das Abstellteil auf den Trägern aufliegt und deshalb nach oben angehoben werden kann, ist jener Raum, der das Anheben ermöglicht, nach unten und nach hinten durch die Träger und nach oben durch den Korb begrenzt. Dadurch kann das Abstellteil, z.B. in mißbräuchlicher Absicht nicht in eine Lage gebracht werden, in welcher die Funktion der Ablage beeinträchtigt oder eine Beschädigung möglich wäre. Die Begrenzung des genannten Raumes durch die Träger und den Korb, durch Teile also, die sowieso vorhanden sind, bedeutet deshalb einen weiteren Vorteil der Erfindung.

Die Erfindung wird anhand von Ausführungsbeispielen näher erläutert. Es zeigt
Fig. 1 bis Fig. 4 verschiedene Ausführungsbeispiele anhand unterschiedlicher Fahrgestelle sowie
Fig. 5 eine Draufsicht auf einen Abschnitt eines Fahrgestelles.

Die in den Figuren 1 bis 4 gezeigten Einkaufswagen 1 weisen folgende gemeinsame Merkmale auf: Ein mit Fahrrollen 3 ausgestattetes Fahrgestell 2, dessen Längsseiten 4 durch ein- oder mehrteilige Träger 12 gebildet sind. Die üblicherweise durch wenigstens eine Querverbindung verbundenen Träger 12 tragen bevorzugt an ihrer höchsten Erhebung einen Korb 6, der sich üblicherweise in Schieberichtung des Einkaufswagens 1 verjüngt. Das rückwärtige offene Ende des Korbes 6 ist in bekannter Weise durch eine verschwenkbare Klappe 8 verschließbar, so daß es möglich ist, gleiche Einkaufswagen 1 platzsparend ineinanderzuschieben, also zu stapeln. Gewöhnlich ist am Korb 6 eine Schiebeeinrichtung 9 in Form eines Handgriffes vorgesehen, wobei dieser auch am Fahrgestell 2 angeordnet sein kann. Im hinteren Bereich 5 eines jeden Einkaufswagens 1 ist eine aus einem Schwenkteil 26 und aus einem Abstellteil 30 gestaltete Ablage 25 vorgesehen, die nach rückwärts in eine Gebrauchslage und umgekehrt bewegbar ist, wobei das Schwenkteil 26 um eine horizontale Achse 29 am rückwärtigen Ende 10 des Fahrgestelles 2 begrenzt verschwenkbar gelagert ist und wobei die Lagerung der zum Schwenkteil 26 gehörenden Stützen 28 mit großzügigem Spiel so gewählt sein kann, daß sich das Schwenkteil 26 auch quer zur Achse 29 eine gewisse Wegstrecke anheben und absenken läßt. Das Abstellteil 30 ist mit seinem hinteren Bereich 31 um eine horizontale Achse 33 verschwenkbar am Schwenkteil 26 angelenkt, während am vorderen Abschnitt 32 des Abstellteiles 30 zwei nicht näher dargestellte Stützmittel 34, etwa Rollen, Vorsprünge und dergleichen vorgesehen sind, die auf den Trägern 12 des Fahrgestelles 2 aufliegend schiebebeweglich abgestützt sind. Die horizontalen Achsen 29 und 33 sind quer zur Schieberichtung des Einkaufswagens angeordnet. Die Ablagen 25 sind bei allen Ausführungsbeispielen in Gebrauchslage durchgehend und in Nichtgebrauchslage strichpunktiert gezeichnet. Beim Ausführungsbeispiel gemäß Fig. 1 ist als größerer Gegenstand 35 eine auf der Ablage 25 abgestellte Getränkekiste eingezeichnet.

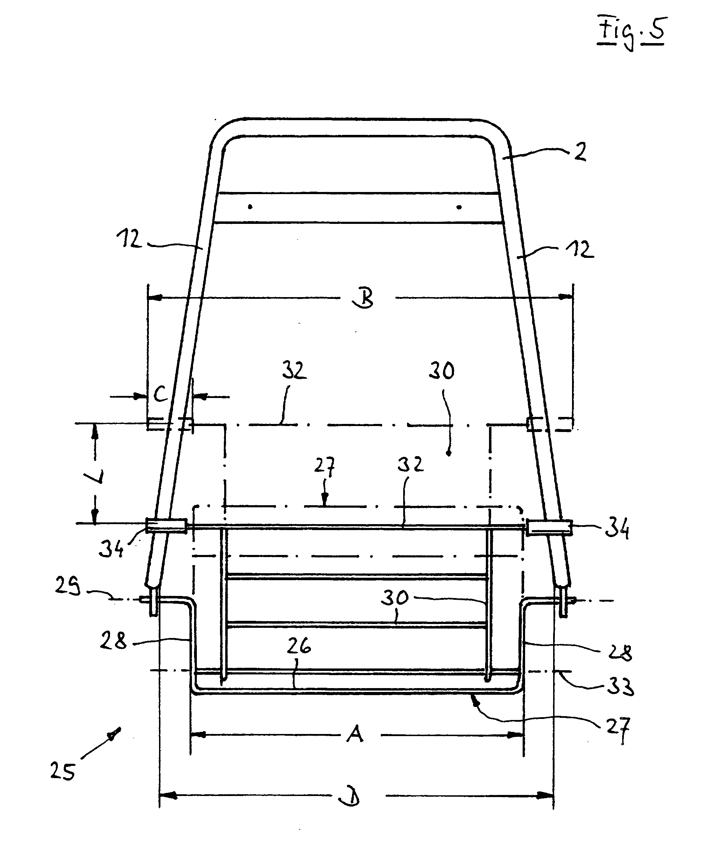

Bei dem in Fig. 1 gezeigten Einkaufswagen 1 sind die Längsseiten 4 des Fahrgestelles 2 durch zwei rohrförmige Träger 12 gebildet, die vorne ineinander übergehend ein Teil bilden. Die Träger 12 weisen einen horizontalen unteren Abschnitt 13 auf, der einer Krümmung 14 folgend im hinteren Bereich 5 des Einkaufswagens 1 nach oben strebt, anschließend in eine entgegengesetzte Krümmung 15 übergeht und dann schräg nach oben und nach hinten weitergeführt ist, wobei die oberen Enden der beiden Träger 12 die Schiebeeinrichtung 9 tragen. Die Zeichnung zeigt deutlich, daß das Abstellteil 30 mit seinem vorderen Abschnitt 32 auf den Trägern 12 aufliegt, sich also auf den Trägern 12 abstützt und daß in Gebrauchslage der Ablage 25 die Krümmung 14 der beiden Träger 12 je einen Anschlag für den vorderen Abschnitt 32 des Abstellteiles 30 bilden, so daß die Ablage 25 nicht mehr weiter nach hinten hinaus bewegt werden kann. Beim Verschwenken der Ablage 25 gleitet der vordere Abschnitt 32 des Abstellteiles 30 auf den Trägern 12 in Längsrichtung des Einkaufswagens 1 hin und her. Die dabei zurückgelegte Wegstrecke (Maß L, siehe Fig. 5), wird aus der Zeichnung aus den beiden Positionen (Gebrauchslage/Nichtgebrauchslage) des vorderen Abschnittes 32 des Abstellteiles 30 ersichtlich. Im Beispiel ist der vordere Abschnitt 32 des Abstellteiles 30 in Gebrauchslage der Ablage 25 in einem Abstand A zum hinteren unteren Rand 7 des Korbes 6 zurückversetzt.

Die Längsseiten 4 des Fahrgestelles 2 des in Fig. 2 gezeigten Einkaufswagens 1 sind durch je einen horizontalen unteren Abschnitt 13 der Träger 12 sowie durch je zwei nach oben gerichtete weitere Abschnitte 16, 16' der Träger 12 gebildet. Der vordere Abschnitt 32 des Abstellteiles 30 liegt auf den horizontalen Abschnitten 13 der Träger 12 auf. In Gebrauchslage schlagen die Abschnitte 32 an die vorderen (16) der paarweise nach oben gerichteten Abschnitte 16, 16' der Träger 12 an, so daß dadurch die Gebrauchslage der Ablage 25 bestimmt ist. In der Zeichnung ist im Bereich des in Nichtgebrauchslage befindlichen Abstellteiles 30 ein Doppelpfeil eingezeichnet. Dieser Pfeil verdeutlicht, daß das Abstellteil 30 um die am Schwenkteil 26 gelegene horizontale Achse 33 schwenkbar ein Stück weit nach oben anhebbar ist. Dieses Merkmal läßt sich auf alle hier vorgestellten Einkaufswagen 1 übertragen. Der Raum, der ein Anheben des Abstellteiles 30 oder besser des vorderen Abschnittes 32 ermöglicht, ist nach unten und nach hinten durch die Träger 12 und nach oben durch den Korb 6 begrenzt. Ein Anheben des Abstellteiles 30 ist, abgesehen von geringem Spiel, nur möglich, so lange sich die Ablage 25 nicht in ihrer Gebrauchslage befindet.

Bei dem in Fig. 3 dargestellten Einkaufswagen 1 sind die Träger 12, welche die Längsseiten 4 des Fahrgestelles 2 bilden, durch je einen nach hinten ansteigenden Abschnitt 17 und durch je einen in Schieberichtung des Einkaufswagens 1 steil ansteigenden Abschnitt 18 gebildet, wobei der steile Abschnitt 18 ortsfest mit dem Abschnitt 17 verbunden ist und den Korb 6 trägt. Die Abschnitte 17, 18 sind durch auf Abstand gehaltene Stababschnitte 19 gebildet, die über geeignete Zwischenstücke 20 verbunden sind. Der vordere Abschnitt 32 des Abstellteiles 30 ist auf den so gebildeten Trägern 12 anhebbar abgestützt. In Gebrauchslage der Ablage 25 schlägt der vordere Abschnitt 32 des Abstellteiles 30 an die jeweils vorderen der gezeigten Stababschnitte 19 des steilen Abschnittes 18 an. Beim Verschwenken der Ablage 25 bewegt sich der vordere Abschnitt 32 des Abstellteiles 30 auf den oben gelegenen Stababschnitten 19 der beiden Abschnitte 17.
Bei diesem Ausführungsbeispiel sind die beiden, die Längsseiten 4 des Fahrgestelles 2 bildenden Träger 12 durch eine Querstrebe 36 verbunden. Die Querstrebe 36 ist zwischen die Stababschnitte 19 der Träger 12 eingefügt und mit diesen verschweißt. Die Querstrebe 36 befindet sich unterhalb der Wegstrecke, welche der vordere Abschnitt 32 des Abstellteiles 30 beim Verschwenken der Ablage 25 durchmißt. Da sich die Querstrebe 36 unterhalb dieser Wegstrecke befindet, stößt sie nicht an das Abstellteil 30 an. Die Querstrebe 36 dient der Erhöhung der Stabilität des Fahrgestelles 2.

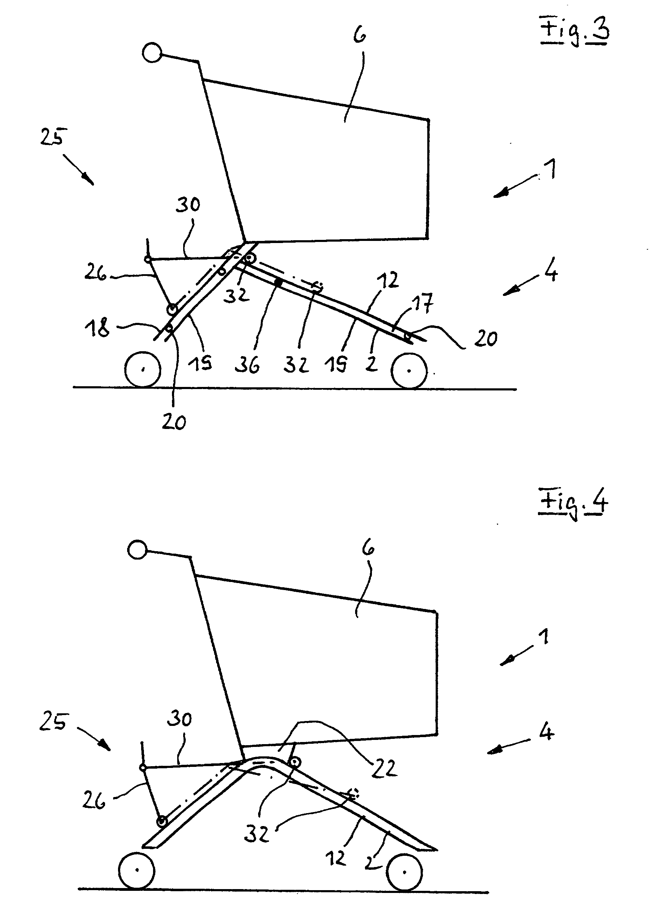

Fig. 4 zeigt einen Einkaufswagen 1, bei dem die Längsseiten 4 des Fahrgestelles 2 durch je einen aus Rohr bestehenden, nach oben gekrümmten Träger 12 gebildet sind. Der vordere Bereich 32 des Abstellteiles 30 liegt auf den Trägern 12 auf und ist, ebenfalls am Schwenkteil 26 anhebbar gelagert, auf den Trägern 12 abgestützt. In Gebrauchslage liegt der vordere Abschnitt 32 des Abstellteiles 30 an zwei Korbstützteilen 22 an, die Bestandteil der Träger 12 sind.

In einer Draufsicht zeigt Fig. 5 in schematisch dargestellter Weise ein Fahrgestell 2 mit daran angeordneter Ablage 25. Das Schwenkteil 26 ist mit seinen Stützen 28 um die horizontale Achse 29 am Fahrgestell 2, an oder nahe den Trägern 12 bewegbar gelagert. Vom Schwenkteil 26 aus erstreckt sich das am Schwenkteil 26 angelenkte Abstellteil 30 nach vorne und ist mit seinem vorderen Abschnitt 32 auf den Trägern 12 abgestützt. Die dazu erforderlichen Stützmittel 34 sind aus gleitfähigem Kunststoff gefertigt. Die Stützmittel 34 sind so lange gestaltet, Maß C, daß sie sich in Gebrauchsund in Nichtgebrauchslage immer auf den in Schieberichtung des Einkaufswagens 1 konisch zulaufenden Trägern 12 abstützen. Damit die Ablage 25 in Nichtgebrauchslage möglichst wenig Platz beansprucht, sind die einzelnen Anlenkpunkte von Fahrgestell 2, Schwenkteil 26 und Abstellteil 30 so gewählt, daß zumindest ein Teil der oberen Querverbindung 27 des Schwenkteiles 26, welche bevorzugt auch den rückwärtigen Anschlag für einen auf die Ablage 25 gestellten Gegenstand 35 bildet, innerhalb des Grundrisses des Abstellteiles 30 angeordnet. Da die Breite A der oberen Querverbindung 27 des Schwenkteiles 26 so gewählt ist, daß nicht nur das Abstellteil 30, sondern auch das Schwenkteil 26 zwischen den Trägern 12 bewegbar ist, liegt das Schwenkteil 26 in Nichtgebrauchslage der Ablage 25 auf dem Abstellteil 30 auf, so daß zwischen dem Schwenkteil 26 und dem Abstellteil 30 eine Selbsthemmung eintritt, und das Schwenkteil 26 nicht mehr weiter bewegt werden kann. Es sind deshalb nicht unbedingt gesonderte Anschläge erforderlich, die den Bewegungsbereich des Schwenkteiles 26 in der Nichtgebrauchslage der Ablage 25 begrenzen müßten. Die außen gemessenen Breite B des vorderen Abschnittes 32 des Abstellteiles 30 ist größer als die größte innen gemessene Distanz D der Träger 12. Dadurch ist sichergestellt, daß das Abstellteil 30 in Gebrauchslage der Ablage 25 immer eine ausreichende Abstützung an den Trägern 12 erhält.
Der vordere Abschnitt 32 des Abstellteiles 30 muß nicht unbedingt die vordere Begrenzung des Abstellteiles 30 sein. Er kann entweder noch weiter vorne in einem Abstand zur Stellfläche des Abstellteiles 30 angeordnet oder zurückversetzt auf Höhe der Stellfläche des Abstellteiles 30 vorgesehen sein. Die jeweilig passende Anordnung hängt vielmehr von der Gestaltung der Träger 12 und damit des Fahrgestelles 2 ab.

Es ist im übrigen unerheblich, ob die durch das Maß L definierte Wegstrekke, welche der vordere Abschnitt 32 des Abstellteiles 30 beim Schwenken der Ablage 25 auf den Trägern 12 zurücklegt, horizontal und/oder ansteigend oder abfallend angeordnet ist. Bei einem ansteigenden Verlauf z.B. nimmt auch eine in Nichtgebrauchslage befindliche Ablage 25 eine ansteigende, platzsparende Lage ein, so daß sie nicht oder nur unwesentlich in den unterhalb des Korbes 6 befindlichen Bereich ragt. Dies ist beispielsweise dann von Nutzen, wenn sich unterhalb des Korbes 6 am Fahrgestell 2 eine zusätzliche Abstelleinrichtung befindet, die dann ohne daß die Ablage 25 stört, ebenfalls mit Ware beladen werden kann.

## Patentansprüche

1. Stapelbarer Einkaufswagen, mit einer Schiebeeinrichtung und mit einem mit Fahrrollen ausgestatteten Fahrgestell, dessen Längsseiten durch einoder mehrteilige Träger gebildet sind, die einen in Schieberichtung sich verjüngenden Korb tragen, dessen rückwärtiges Ende durch eine Klappe verschließbar ist, wobei im hinteren Bereich des Einkaufswagens eine aus einer Nichtgebrauchslage in eine rückwärtige Gebrauchslage und umgekehrt bewegbare, ein Schwenkteil und ein Abstellteil aufweisende, zum Abstellen größerer Gegenstände bestimmte Ablage vorgesehen ist und wobei das Schwenkteil um eine horizontale Achse verschwenkbar sowie wahlweise anhebbar am Fahrgestell gelagert ist und das Abstellteil mit seinem vorderen Abschnitt schiebebeweglich geführt und mit seinem hinteren Bereich um eine horizontale Achse bewegbar mit dem Schwenkteil verbunden ist, **dadurch gekennzeichnet, daß** das Abstellteil (30) mit seinem vorderen Abschnitt (32) auf den Trägern (12) aufliegt.

2. Stapelbarer Einkaufswagen nach Anspruch 1, **dadurch gekennzeichnet, daß** der vordere Abschnitt (32) des Abstellteiles (30), mit Ausnahme in der Gebrauchslage der Ablage (25), anhebbar auf den Trägern (12) abgestützt ist.

3. Stapelbarer Einkaufswagen nach Anspruch 1 oder 2, **dadurch gekennzeichnet, daß** der zum Anheben des vorderen Abschnittes (32) vorhandene Raum nach unten und nach rückwärts durch die Träger (12) und nach oben durch den Korb (6) begrenzt ist.

4. Stapelbarer Einkaufswagen nach einem der Ansprüche 1 bis 3, **dadurch gekennzeichnet, daß** die Träger (12) in Gebrauchslage der Ablage (25) einen Anschlag für das Abstellteil (30) bilden.

5. Stapelbarer Einkaufswagen nach einem der Ansprüche 1 bis 4, **dadurch gekennzeichnet, daß** in Gebrauchslage der Ablage (25) der vordere Abschnitt (32) des Abstellteiles (30) in einem Abstand A vom hinteren unteren Rand (7) des Korbes (6) zurückversetzt ist.

6. Stapelbarer Einkaufswagen nach einem der Ansprüche 1 bis 5, **dadurch gekennzeichnet, daß** die Breite der oberen Querverbindung (27) des Schwenkteiles (26) so gewählt ist, daß das Schwenkteil (26) zwischen den Trägern (12) bewegbar ist.

7. Stapelbarer Einkaufswagen nach einem der Ansprüche 1 bis 6, **dadurch gekennzeichnet, daß** in Nichtgebrauchslage der Ablage (25) zumindest ein Teil der oberen Querverbindung (27) des Schwenkteiles (26) innerhalb des Grundrisses des Abstellteiles (30) angeordnet ist.

## Claims

1. A stackable shopping trolley with a pushing device and with a wheel frame equipped with casters, the long sides of the wheel frame being formed by single-component or multi-component supports carrying a basket which narrows in the pushing direction, the rearward end of which basket is closable with a flap, wherein a shelf is provided for the purpose of depositing larger articles, the shelf being movable from a position of non-use to a rearward position of use and vice versa and having a pivoting part and a depositing part, and wherein the pivoting part is mounted on the wheel frame in such a way as to be pivotable about a horizontal axis and optionally raisable, and the depositing part - with its anterior part - is guided in such a way as to be movable by pushing and - with its rearward region - is connected to the pivoting part so as to be movable about a horizontal axis, **characterised in that**, with its anterior portion (32), the depositing part (30) is positioned on the supports (12).

2. A stackable shopping trolley according to Claim 1, **characterised in that** the anterior portion (32) of the depositing part (30) is - apart from in the position of use of the shelf (25) - raisably supported on the supports (12).

3. A stackable shopping trolley according to Claim 1 or 2, **characterised in that** the space available for raising the anterior portion (32) is limited below and to the rear by the supports (12) and above by the basket (6).

4. A stackable shopping trolley according to one of Claims 1 to 3, **characterised in that**, in the position of use of the shelf (25), the supports (12) form a limit stop for the depositing part (30).

5. A stackable shopping trolley according to one of Claims 1 to 4, **characterised in that**, in the position of use of the shelf (25), the anterior portion (32) of the depositing part (30) is set back by a distance A from the posterior lower margin (7) of the basket (6).

6. A stackable shopping trolley according to one of Claims 1 to 5, **characterised in that** the width of the upper cross-connection (27) of the pivoting part (26) is selected in such a way that the pivoting part (26) is movable between the supports (12).

7. A stackable shopping trolley according to one of Claims 1 to 6, **characterised in that**, in the position of non-use of the shelf (25), at least part of the upper cross-connection (27) of the pivoting part (26) is arranged within the outline of the depositing part (30).

## Revendications

1. Chariot à provisions imbricable, comprenant un système de poussée et un châssis équipé de roulettes, dont les côtés longitudinaux sont formés par des supports en une ou plusieurs partie(s) qui portent un panier se rétrécissant dans la direction du coulissement, et dont l'extrémité postérieure peut être obturée par un volet, sachant qu'il est prévu, dans la région postérieure du chariot à provisions, un reposoir destiné à recevoir des objets de grand dimensionnement, comprenant une partie pivotante et une partie réceptrice, et mobile d'une position de non-utilisation à une position postérieure d'utilisation, et inversement, et sachant que la partie pivotante est montée sur le châssis avec faculté de pivotement autour d'un axe horizontal, ainsi qu'avec faculté de soulèvement sélectif, et que la partie réceptrice est guidée avec mobilité coulissante par son tronçon antérieur et est reliée à la partie pivotante par sa région postérieure, avec faculté de mouvement autour d'un axe horizontal, **caractérisé par le fait que** la partie réceptrice (30) repose sur les supports (12) par son tronçon antérieur (32).

2. Chariot à provisions imbricable selon la revendication 1, **caractérisé par le fait que** le tronçon antérieur (32) de la partie réceptrice (30) prend appui sur les supports (12) avec faculté de soulèvement, hormis dans la position d'utilisation du reposoir (25).

3. Chariot à provisions imbricable selon la revendication 1 ou 2, **caractérisé par le fait que** l'espace, présent pour le soulèvement du tronçon antérieur (32), est délimité par les supports (12) vers le bas et vers l'arrière, et par le panier (6) vers le haut.

4. Chariot à provisions imbricable selon l'une des revendications 1 à 3, **caractérisé par le fait que** les supports (12) forment, en position d'utilisation du reposoir (25), une butée affectée à la partie réceptrice (30).

5. Chariot à provisions imbricable selon l'une des revendications 1 à 4, **caractérisé par le fait que**, en position d'utilisation du reposoir (25), le tronçon antérieur (32) de la partie réceptrice (30) accuse un retrait d'une distance A vis-à-vis du bord inférieur postérieur (7) du panier (6).

6. Chariot à provisions imbricable selon l'une des revendications 1 à 5, **caractérisé par le fait que** la largeur de la solidarisation transversale supérieure (27) de la partie pivotante (26) est choisie de façon telle que ladite partie pivotante (26) soit mobile entre les supports (12).

7. Chariot à provisions imbricable selon l'une des revendications 1 à 6, **caractérisé par le fait que**, en position de non-utilisation du reposoir (25), au moins une partie de la solidarisation transversale supérieure (27) de la partie pivotante (26) se trouve dans les limites du profil de base de la partie réceptrice (30).
